# EUROPÄISCHE PATENTSCHRIFT

(11) **EP 1 347 018 B1**
(45) Veröffentlichungstag und Bekanntmachung des Hinweises auf die Patenterteilung: **13.07.2005**
(21) Anmeldenummer: 03003641.2
(22) Anmeldetag: 18.02.2003
(51) Int. Cl.: C09C 1/56

(54) **Verfahren zur Herstellung von nachbehandeltem Russ**
Method for producing after-treated carbon black
Procédé de préparation de noir de carbone post-traité

(30) Priorität: 14.03.2002 DE 10211098
(43) Veröffentlichungstag der Anmeldung: 24.09.2003
(73) Patentinhaber: Degussa AG, 40474 Düsseldorf (DE)
(72) Erfinder: Karl, Alfons, Dr., 63584 Gründau (DE)

(56) Entgegenhaltungen:
- EP-A- 0 969 052
- WO-A-96/37547
- GB-A- 695 492
- US-A- 3 364 048
- US-A- 4 755 358

## Beschreibung

Die Erfindung betrifft ein Verfahren zur Herstellung von nachbehandeltem Ruß.

In Lacken und Druckfarben wird als Schwarzpigment wegen seiner hervorragenden Eigenschaften überwiegend Ruß eingesetzt. Pigmentruße stehen in großer Auswahl mit unterschiedlichen Eigenschaften zur Verfügung. Zur Herstellung von Pigmentruß werden verschiedene Verfahren eingesetzt. Am häufigsten ist die Herstellung durch oxidative Pyrolyse von kohlenstoffhaltigen Rußrohstoffen. Hierbei werden die Rußrohstoffe bei hohen Temperaturen in Anwesenheit von Sauerstoff unvollständig verbrannt. Zu dieser Klasse von Ruß-Herstellverfahren gehören zum Beispiel das Furnaceruß-Verfahren, das Gasruß-Verfahren und das Flammruß-Verfahren. Als kohlenstoffhaltige Rußrohstoffe werden überwiegend mehrkernige aromatische Rußöle eingesetzt.

Die Oberflächenchemie der Ruße hängt von dem gewählten Herstellverfahren ab. Beim Furnaceruß-Verfahren erfolgt die Rußbildung in einer stark reduzierenden Atmosphäre, während beim Gasruß-Verfahren der atmosphärische Sauerstoff freien Zugang zur Rußbildungszone hat. Entsprechend weisen die Gasruße schon direkt nach der Herstellung einen wesentlich größeren Gehalt an Oberflächenoxiden auf als Furnaceruße.

Pigmentruße können oxidativ nachbehandelt werden, um ihren Gehalt an flüchtigen Bestandteilen zu erhöhen. Als Oxidationsmittel kommen Salpetersäure, Stickstoffdioxid und im geringeren Umfang auch Ozon zum Einsatz. Das Oxidationsverhalten hängt dabei entscheidend vom Ruß-Herstellverfahren ab. Aus US 3,565,657 ist die Oxidation von Furnacerußen mit Salpetersäure bekannt.

Ferner ist bekannt Furnaceruße durch Ozonbehandlung zu oxidieren (US 3,245,820, US 3,364,048, US 3,495,999).

Nachteile der bekannten Verfahren sind der schlechte Stoff- und Energieaustausch, schlechte Homogenität des Produktes, mechanisch bewegte Apparateteile und diskontinuierliche Fahrweise.

Aufgabe der Erfindung ist es, ein Verfahren zur Verfügung zu stellen, bei dem ein optimaler Stoff- und Energieaustausch stattfindet, sehr gute Homogenität des Produktes vorliegt und kontinuierlich betrieben werden kann.

Gegenstand der Erfindung ist ein Verfahren zur Herstellung von nachbehandeltem Ruß, welches dadurch gekennzeichnet ist, daß man den Ruß in einem Fließbett unter Zusatz von Fluidisierungsmittel, ausgewählt aus der Gruppe pyrogene Kieselsäure, hydrophobierte pyrogene Kieselsäure, pyrogenes Mischoxid oder pyrogenes Aluminiumoxid, fluidisiert und mit einem Nachbehandlungsmittel in Kontakt bringt.

Als Ruß können Furnaceruß, Gasruß, Channelruß, Flammruß, Thermalruß, Acetylenruß, Plasmaruß, Inversionsruße, bekannt aus DE 195 21 565, Si-haltige Ruße, bekannt aus WO 98/45361 oder DE 19613796, oder metallhaltige Ruße, bekannt aus WO 98/42778, Lichtbogenruß und Ruße, die Nebenprodukte chemischer Produktionsprozesse sind, verwendet werden. Der Ruß kann durch vorgelagerte Reaktionen modifiziert werden.

Es können Ruße, die als Verstärkerfüllstoff in Kautschukmischungen verwendet werden, eingesetzt werden.

Es können Farbruße eingesetzt werden.

Weitere Ruße können sein: Leitfähigkeitsruß, Ruß zur UV-Stabilisierung, Ruß als Füllstoff in anderen Systemem als Kautschuk, wie zum Beispiel in Bitumen, Kunststoff, Ruß als Reduktionsmittel, in der Metallurgie.

Vorzugsweise kann man als Ruß einen Furnaceruß verwenden. Besonders bevorzugt können normal und höher strukturierte Furnaceruße mit einem DBP-Wert größer 70 ml/100g, bevorzugt größer 90 ml/100g, verwendet werden.

Als Ruß können auch Rußgemische verwendet werden.

Als pyrogene Kieselsäure kann Aerosil 90, Aerosil 200, Aerosil OX 50 oder Aerosil 300, als hydrophobierte pyrogene Kieselsäure kann Aerosil R 8200, Aerosil R 202 oder Aerosil R 972, als pyrogene Mischoxide kann Aerosil MOX 80 oder Aerosil MOX 170 und als pyrogenes Aluminiumoxid kann Aluminiumoxid C der Firma Degussa AG eingesetzt werden.

Das Fluidisierungsmittel kann in Mengen von 0,1 bis 10 Gew.-%, vorzugsweise 0,5 bis 2 Gew.-%, bezogen auf den Ruß, eingesetzt werden.

Das Fluidisierungsmittel kann im Fließbett mit dem Ruß gemischt werden oder vorgemischt in das Fließbett eingetragen werden.

Das Nachbehandlungsmittel kann ein Oxidationsmittel oder Extraktionsmittel sein.

Als Oxidationsmittel kann Ozon oder NO₂ verwendet werden.

Als Extraktionsmittel kann Luft, Wasserdampf oder Luft/Wasserdampfgemische verwendet werden, um beispielsweise den Extraktgehalt von Rußen abzusenken.

Das Nachbehandlungsmittel kann in das Fließbett eingedüst werden. Die Nachbehandlung kann bei Temperaturen von 10°C bis 1200°C durchgeführt werden.
Wird als Nachbehandlungsmittel Ozon eingesetzt, kann die Temperatur vorzugsweise 10°C bis 100°C betragen.
Wird als Nachbehandlungsmittel NO₂ eingesetzt, kann die Temperatur vorzugsweise 100-300°C betragen.
Wird als Nachbehandlungsmittel Luft/Wasserdampf eingesetzt, kann die Temperatur vorzugsweise 300°C bis 600°C betragen.

Wird als Nachbehandlungsmittel Wasserdampf eingesetzt, kann die Temperatur vorzugsweise 800-1100°C betragen. Die Verweilzeit im Fließbett kann 0,1 bis 10 Stunden, vorzugsweise 1 bis 5 Stunden, betragen. Die Menge an Nachbehandlungsmittel kann von 1 mg/g Ruß bis 10 g/g Ruß betragen. Das Nachbehandlungsmittel kann vorgewärmt in das Fließbett eingeleitet werden.

Das Fließbett kann kontinuierlich betrieben werden.

Der mit dem erfindungsgemäßen Verfahren hergestellte Ruß kann anschließend mit Luft oder Stickstoff ausgeblasen werden, um überschüssiges Nachbehandlungsmittel zu entfernen. Das Ausblasen kann im Fließbett oder außerhalb des Fließbettes erfolgen. Die Ausblaszeiten können von 10 Minuten bis 10 h, vorzugsweise 30 Minuten bis 2 h, betragen. Die Ausblastemperatur kann 20° bis 300°C, vorzugsweise 50° bis 200°C, betragen.

Die durch das erfindungsgemäße Verfahren hergestellten nachbehandelten Ruße können als Pigmentruße verwendet werden.

Das erfindungsgemäße Verfahren hat den Vorteil, daß schlecht zu fluidisierende Ruße, beispielsweise Furnaceruße, durch den Zusatz von Fluidisierungsmittel gut fluidisiert werden können. Weitere Vorteile des erfindungsgemäßen Verfahrens gegenüber dem bekannten gerührten Festbett sind der optimale Stoff- und Energieaustausch, die sehr gute Homogenität des nachbehandelten Rußes, sowie in einem Reaktor, der kontinuierlich und ohne mechanisch bewegte Teile betrieben werden kann.

### Beispiele

Für die Beispiele werden die in Tabelle 1 aufgeführten Ruße verwendet.

**Tabelle 1**

| Ruß | | Printex 30 | Printex 60 | Printex 90 | Printex 3 |
|---|---|---|---|---|---|
| Iodzahl (ASTM 1510) | mg/g | 87 | 127 | 350 | 96 |
| CTAB (ASTM 3765) | m²/g | 78 | 102 | 245 | 83 |
| DBP (ASTM 2414) | ml/100g | 108 | 109 | 95 | 133 |
| Ölbedarf (DIN ENISO 787-5) | g/100g | 590 | 600 | 750 | 710 |
| Flüchtige 950°C (DIN 53552) | Gew.-% | 2,7 | 2,3 | 2,5 | 2,0 |
| pH-Wert (DIN ENISO 787-9) | | 9,6 | 9,5 | 9,2 | 10,0 |
| Schüttdichte (DIN 53600) | g/l | 155 | 200 | 89 | 61 |
| Printex 30, Printex 60, Printex 90 und Printex 3 sind Pigmentruße der Degussa AG. | | | | | |

Die reinen Ruße können im Fließbett nicht fluidisiert werden. Erst durch den Zusatz von Aerosil R 812 S können die Ruße fluidisiert werden. Aerosil R 812 S wird in einer Menge von 1 Gew.-% dem Ruß untergemischt.

### Beispiel 1

Die Oxidation von Printex 30 mit Ozon und NO₂ wird in zwei unterschiedlich großen Fließbettapparaturen (Durchmesser 80 mm und 200 mm) durchgeführt. Mit Luftmengen, wie sie auch zur Oxidation der Gasruße verwendet werden, wird durch den Aerosil-Zusatz Fließbettbedingungen erreicht. Durch Variation der Reaktionszeit und der eingesetzten Rußmenge werden die unterschiedlichen Flüchtigen-Gehalte eingestellt, wobei ein Flüchtigen-Gehalt von 5,0 Gew.-% nicht die Obergrenze darstellt. Die ozonoxidierten Ruße liegen bei gleichem Oxidationsgrad im Ölbedarf deutlich besser als die NO₂-oxidierten Ruße. Die Versuchsparameter und die Rußeigenschaften sind in Tabelle 2 aufgeführt.

**Tabelle 2**

| | | Printex 30 NO₂ oxidiert | Printex 30 NO₂ oxidiert | Printex 30 Ozon oxidiert | Printex 30 Ozon oxidiert |
|---|---|---|---|---|---|
| Rußmenge | g | 2500 | 2500 | 2500 | 2500 |
| Solltem-peratur | °C | 220 | 220 | 20 | 20 |
| Luftmenge | Nl/h | 1500 | 1500 | 1500 | 1500 |
| NO₂-Menge | Nl/h | 70 | 70 | - | - |
| NO₂-Konzentration | Vol.-% | 4,7 | 4,7 | - | - |
| Ozon-Konzentration | g/Nm³ | - | - | 21 | 21 |
| Ozon-Menge | g/h | - | - | 31,5 | 31,5 |
| Reaktions -zeit | h | 0,5 | 2,0 | 2,0 | 6,0 |
| Ausblas-zeit | h | 1 | 1 | 1 | 1 |
| Iodzahl | mg/g | 77 | 82 | 54 | 43 |
| CTAB | m²/g | 80 | 88 | 86 | 94 |
| DBP | ml/100g | 108 | 106 | 111 | 111 |
| Ölbedarf | g/100g | 540 | 470 | 340 | 370 |
| Flüchtige | Gew.-% | 2,7 | 5,3 | 3,1 | 4,5 |
| pH-Wert | | 4,4 | 3,6 | 3,4 | 2,7 |
| Schüttdichte | g/l | 157 | 277 | 168 | 140 |

### Beispiel 2

Die Oxidation von Printex 60 mit Ozon wird in der 80 mm Durchmesser Fließbettapparatur durchgeführt. Durch Variation der Reaktionszeit und der eingesetzten Rußmenge werden die unterschiedlichen Flüchtigen-Gehalte eingestellt. Besonders deutlich ist der Einfluß der Ozonoxidation auf den Ölbedarf, der schon bei geringen Oxidationsgraden deutlich abgesenkt wird. Die Versuchsparameter und die Rußeigenschaften sind in Tabelle 3 aufgeführt.

**Tabelle 3**

| | | Printex 60 Ozon oxidiert | Printex 60 Ozon oxidiert | Printex 60 Ozon oxidiert |
|---|---|---|---|---|
| Rußmenge | g | 600 | 500 | 400 |
| Solltemperatur | °C | 20 | 20 | 20 |
| Luftmenge | Nl/h | 500 | 500 | 750 |
| Ozon-Konzentration | g/Nm³ | 21,0 | 21,0 | 15,6 |
| Ozon-Menge | g/h | 10,5 | 10,5 | 11,7 |
| Reaktions -zeit | h | 4,0 | 4,0 | 3,0 |
| Ausblas-zeit | h | 1 | 1 | 1 |
| Iodzahl | mg/g | 64 | 50 | 37 |
| CTAB | m²/g | 113 | 127 | 129 |
| DBP | ml/100g | 115 | 113 | 114 |
| Ölbedarf | g/100g | 320 | 234 | 210 |
| Flüchtige | Gew.-% | 3,9 | 5,7 | 6,1 |
| pH-Wert | | 2,8 | 2,7 | 2,6 |
| Schüttdichte | g/l | 204 | 258 | 244 |

### Beispiel 3

Die Oxidation von Printex 90 mit Ozon wird in zwei unterschiedlich großen Fließbettapparaturen (Durchmesser 80 mm und 200 mm) durchgeführt. Durch Variation der Reaktionszeit werden die unterschiedlichen Flüchtigen-Gehalte eingestellt, wobei ein Flüchtigen-Gehalt von 10 Gew.-% möglich ist. Die Versuchsparameter und die Rußeigenschaften sind in Tabelle 4 aufgeführt.

**Tabelle 4**

| | | Printex 90 Ozon oxidiert | Printex 90 Ozon oxidiert | Printex 90 Ozon oxidiert |
|---|---|---|---|---|
| Rußmenge | g | 1000 | 1000 | 1000 |
| Solltemperatur | °C | 20 | 20 | 20 |
| Luftmenge | Nl/h | 1000 | 1250 | 1000 |
| Ozon-Konzentration | g/Nm³ | 31,6 | 36,0 | 36,0 |
| Ozon-Menge | g/h | 31,6 | 45,0 | 36,0 |
| Reaktions -zeit | h | 3,0 | 2,5 | 6,0 |
| Ausblas-zeit | h | 1 1 | | 1 |
| Iodzahl | mg/g | 238 | 215 | 147 |
| CTAB | m²/g | 283 | 271 | 300 |
| DBP | ml/100g | 63 | | 83 |
| Ölbedarf | g/100g | 580 | 420 | 320 |
| Flüchtige | Gew.-% | 5,9 | 7,4 | 9,8 |
| pH-Wert | | 3,1 | 2,9 | 2,3 |
| Schuttdichte | g/l | 102 | | 98 |

### Beispiel 4

Die Oxidation von Printex 3 mit Ozon wird in zwei unterschiedlich großen Fließbettapparaturen (Durchmesser 80 mm und 200 mm) durchgeführt. Es werden Ruße mit einem Flüchtigen-Gehalt von 3,1 bis 11,5 Gew.-% hergestellt. Die Ausblaszeit beträgt 1 Stunde, um anhaftendes Ozon oder labile Peroxide an der Rußoberfläche zu entfernen. Die Ruße werden anschließend trockengeperlt. Die Versuchsparameter und die Rußeigenschaften sind in Tabelle 5 aufgeführt.

**Tabelle 5**

| | | Printex 3 Ozon oxidiert | Printex 3 Ozon oxidiert | Printex 3 Ozon oxidiert | Printex 3 Ozon oxidiert | Printex 3 Ozon oxidiert |
|---|---|---|---|---|---|---|
| Rußmenge | g | 1000 | 1000 | 1500 | 1500 | 1500 |
| Solltemperatur | °C | 20 | 20 | 20 | 20 | 20 |
| Luftmenge | Nl/h | 1250 | 650 | 1250 | 1500 | 1500 |
| Ozon-Konzentration | g/Nm³ | 30,6 | 23,5 | 36,3 | 32,9 | 32,7 |
| Ozon-Menge | g/h | 38,3 | 15,3 | 45,4 | 49,4 | 49,1 |
| Reaktions -zeit | h | 3,0 | 4,0 | 4,0 | 8,0 | 24,0 |
| Ausblas-zeit | h | 1 | 1 | 1 | 1 | 1 |
| Iodzahl | mg/g | 79 | 52 | 63 | 24 | 22 |
| CTAB | m²/g | 98 | 104 | 122 | 142 | 175 |
| DBP | ml/100g | 132 | 134 | 136 | 137 | 138 |
| Ölbedarf | g/100g | 400 | 310 | 350 | 190 | 180 |
| Flüchtige | Gew.-% | 3,1 | 3,7 | 5,5 | 7,7 | 11,5 |
| pH-Wert | | 4,1 | 3,2 | 3,0 | 2,5 | 2,3 |
| Schüttdichte | g/l | 256 | 200 | 212 | 276 | 222 |

## Patentansprüche

1. Verfahren zur Herstellung von nachbehandeltem Ruß, **dadurch gekennzeichnet, daß** man den Ruß in einem Fließbett unter Zusatz von Fluidisierungsmittel, ausgewählt aus der Gruppe pyrogene Kieselsäure, hydrophobierte pyrogene Kieselsäure, pyrogenes Mischoxid oder pyrogenes Aluminium, fluidisiert und mit einem Nachbehandlungsmittel in Kontakt bringt.

2. Verfahren zur Herstellung von nachbehandeltem Ruß nach Anspruch 1, **dadurch gekennzeichnet, daß** man als Ruß Furnaceruß, Gasruß, Channelruß, Flammruß, Thermalruß, Acetylenruß, Plasmaruß, Inversionsruße, Si-haltige Ruße, metallhaltige Ruße, Lichtbogenruß und Ruße, die Nebenprodukte chemischer Produktionsprozesse sind, verwendet.

3. Verfahren zur Herstellung von nachbehandeltem Ruß nach Anspruch 1, **dadurch gekennzeichnet, daß** man als Ruß einen Furnaceruß mit einem DBP-Wert größer 70 ml/100g verwendet.

4. Verfahren zur Herstellung von nachbehandeltem Ruß nach Anspruch 1, **dadurch gekennzeichnet, daß** man das Fluidisierungsmittel in Mengen von 0,1 bis 10 Gew.-%, bezogen auf den Ruß, einsetzt.

5. Verfahren zur Herstellung von nachbehandeltem Ruß nach Anspruch 1, **dadurch gekennzeichnet, daß** man als Nachbehandlungsmittel ein Oxidationsmittel oder Extraktionsmittel einsetzt.

6. Verfahren zur Herstellung von nachbehandeltem Ruß nach Anspruch 5, **dadurch gekennzeichnet, daß** man als oxidationsmittel Ozon oder NO₂ verwendet.

7. Verfahren zur Herstellung von nachbehandeltem Ruß nach Anspruch 5, **dadurch gekennzeichnet, daß** man als Extraktionsmittel Luft oder Luft/Wasserdampfgemische verwendet.

8. Verfahren zur Herstellung von nachbehandeltem Ruß nach Anspruch 1, **dadurch gekennzeichnet, daß** man das Fließbett kontinuierlich betreibt.

9. Verfahren zur Herstellung von nachbehandeltem Ruß nach Anspruch 1, **dadurch gekennzeichnet, daß** man überschüssiges Nachbehandlungsmittel mit Luft oder Stickstoff ausbläst.

## Claims

1. Process for the production of post-treated carbon black, **characterised in that** the carbon black is fluidised in a fluidised bed with the addition of fluidising agent selected from the group comprising pyrogenic silicic acid, hydrophobised pyrogenic silicic acid, pyrogenic mixed oxide or pyrogenic aluminium, and is brought into contact with a post-treatment agent.

2. Process for the production of post-treated carbon black according to claim 1, **characterised in that** furnace black, gas black, channel black, flame black, thermal black, acetylene black, plasma black, inversion blacks, Si-containing carbon blacks, metal-containing carbon blacks, arc black and carbon blacks that are byproducts of chemical production processes are used as carbon black.

3. Process for the production of post-treated carbon black according to claim 1, **characterised in that** a furnace black with a DBP value greater than 70 ml/100g is used as carbon black.

4. Process for the production of post-treated carbon black according to claim 1, **characterised in that** the fluidising agent is used in amounts of 0.1 to 10 wt.% referred to the carbon black.

5. Process for the production of post-treated carbon black according to claim 1, **characterised in that** an oxidising agent or extraction agent is used as post-treatment agent.

6. Process for the production of post-treated carbon black according to claim 5, **characterised in that** ozone or NO₂ is used as oxidising agent.

7. Process for the production of post-treated carbon black according to claim 5, **characterised in that** air or air/steam mixtures is/are used as extraction agent.

8. Process for the production of post-treated carbon black according to claim 1, **characterised in that** the fluidised bed is continuously operated.

9. Process for the production of post-treated carbon black according to claim 1, **characterised in that** excess post-treatment agent is expelled with air or nitrogen.

## Revendications

1. Procédé de préparation de noir de carbone post-traité,
**caractérisé en ce que**
le noir de carbone est fluidifié dans un lit, fluidifié avec addition d'un agent de fluidification sélectionné dans le groupe constitué de l'acide silicique pyrogène, l'acide silicique pyrogène hydrophobe, l'oxyde mixte pyrogène et l'oxyde d'aluminium pyrogène, et mis en contact avec un agent de post-traitement.

2. Procédé de préparation de noir de carbone post-traité selon la revendication 1,
**caractérisé en ce que**
comme noir de carbone on utilise du noir de fourneau, du noir de gaz, du noir de tunnel, du noir de fumée, du noir thermique, du noir d'acétylène, du noir de plasma, des noirs d'inversion, des noirs contenant du silicium, des noirs contenant des métaux, du noir d'arc électrique et des noirs qui sont les produits secondaires de processus de production chimiques.

3. Procédé de préparation de noir de carbone post-traité selon la revendication 1,
**caractérisé en ce que**
comme noir de carbone, on utilise, un noir de fourneau ayant une valeur de DBP supérieure à 70 ml/100 g.

4. Procédé de préparation de noir de carbone post-traité selon la revendication 1,
**caractérisé en ce que**
l'agent de fluidifïcation est introduit en quantités comprises entre 0,1 et 10 % en poids rapporté au noir de carbone.

5. Procédé de préparation de noir de carbone post-traité selon la revendication 1,
**caractérisé en ce que**
comme agent de post-traitement, on utilise un agent d'oxydation ou un agent d'extraction.

6. Procédé de préparation de noir de carbone post-traité selon la revendication 5,
**caractérisé en ce que**
comme agent d'oxydation, on utilise de l'ozone ou du NO₂.

7. Procédé de préparation de noir de carbone post-traité selon la revendication 5,
**caractérisé en ce que**
comme agent d'extraction, on utilise de l'air ou des mélanges d'air et de vapeur d'eau.

8. Procédé de préparation de noir de carbone post-traité selon la revendication 1,
**caractérisé en ce que**
le lit fluidisé fonctionne en continu.

9. Procédé de préparation de noir de carbone post-traité selon la revendication 1,
**caractérisé en ce que**
l'agent de post-traitement excédentaire est évacué avec de l'air ou de l'azote.
